(19) **Europäisches Patentamt**

**European Patent Office**

**Office européen des brevets**

(11) **EP 0 187 522 B2**

(12) **NEW EUROPEAN PATENT SPECIFICATION**

(45) Date of publication and mention
of the opposition decision:
**07.07.1999 Bulletin 1999/27**

(45) Mention of the grant of the patent:
**08.01.1992 Bulletin 1992/02**

(51) Int. Cl.⁶: $C01B\ 39/00$, $B01J\ 29/70$, $B01J\ 20/22$

(21) Application number: **85309442.3**

(22) Date of filing: **23.12.1985**

(54) **Zeolite beta preparation**

**Herstellung von beta-Zeolith**

**Préparation de zéolithe bêta**

(84) Designated Contracting States:
**AT BE CH DE FR GB IT LI LU NL SE**

(30) Priority: **31.12.1984 GB 8432793**

(43) Date of publication of application:
**16.07.1986 Bulletin 1986/29**

(73) Proprietor:
**EXXON RESEARCH AND ENGINEERING
COMPANY
Florham Park, New Jersey 07932-0390 (US)**

(72) Inventors:
• **Van Der Vleugel, Dominicus J.M.
NL-6662 XC Elst (NL)**
• **Walterbos, Johannes W.M.
Hellevoetsluis (NL)**

(74) Representative:
**White, Nicholas John, Dr. et al
Harrison Goddard Foote
Belmont House
20 Wood lane
Leeds, West Yorkshire LS6 2AE (GB)**

(56) References cited:
EP-A- 0 055 046          US-A- 3 308 069
US-A- 4 060 590          US-A- 4 199 556

• **Zeolites 1985, pp. 329-333**
• **Zeolites 1986, pp.2-8**

**EP 0 187 522 B2**

**Description**

This invention relates to zeolite beta, a synthetic aluminosilicate zeolite, and in particular to a simplified process for its preparation.

Zeolite beta is described and claimed in US 3 308 069, reissued as Re 28341 where it is described as a crystalline synthetic material whose composition has been calculated to be:

$[xNa(1.0\pm0.1-x)TEA]AlO_2 \cdot ySiO_2 \cdot wH_2O$

where x is less than 1, preferably less than 0.75; TEA represents tetraethylammonium ion; y is from 5 to 100 and w is from 0 to 4 depending on the condition of dehydration and on the metal cation present. The TEA component is calculated on the basis of the difference between the analyzed value of sodium and the ultimate theoretical cation to Al ratio of 1.0/1.

Zeolite beta is also described the form of a crystalline synthetic material which has catalytic properties having the composition:

$\frac{x}{n} M(1\pm0.1-x)TEA \, AlO_2 \cdot ySiO_2 \cdot wH_2O$

where x, y and w have the values listed above and n is the valence of the metal M which can be any metal, preferably a metal of groups 1A, IIA, IIIA or the transition metals of the periodic table.

This form of the catalyst is obtained from the initial sodium form of zeolite beta by ion exchange.

Zeolite beta is described as being formed by crystallization from a reaction mixture containing the tetraethylammonium ion. Upon heating of the product, at a temperature in the approximate range of 200-930° C or higher, the tetraethylammonium ion undergoes degradation to the hydrogen ion. Furthermore, in this case the value of w in the formula may be essentially O.

The zeolite beta is described as being prepared from reaction mixtures containing tetraethylammonium hydroxide as the alkali and more specifically by heating in aqueous solution a mixture of the oxides or of materials whose chemical compositions can be completely represented as mixtures of the oxides $Na_2O$, $Al_2O_3$, $[(C_2H_5)_4N]_2O$, $SiO_2$ and $H_2O$ at a temperature of 75° C to 200° C until crystallization occurs. The composition of the prior art reaction mixture, expressed in terms of mole ratios, preferably falls within the following ranges:

$SiO_2/Al_2O_3$ - from 10 to 200.
$Na_2O$/tetraethylammonium hydroxide (TEAOH) - from 0.0 to 0.1.
$TEAOH/SiO_2$ - from 0.1 to 1.0.
$H_2O/TEAOH$ - from 20 to 75.

EP0055046 describes zeolite Nu-2, which is said to be a member of the zeolite beta family of zeolites, but which differs from zeolite beta in having a very low cyclohexane sorption capacity (measured at 60% sodium loading of cation sites over 1440 hours) of 1% w/w compared to the cyclohexane sorption capacity of 19.4% w/w quoted for zeolite beta in US 3308068.

In making zeolite beta, according to the prior art, the method comprises reacting in aqueous media, amorphous silica solids or sols and a soluble aluminate along with aqueous solutions of tetraethylammonium hydroxide. The aluminate may be sodium aluminate or tetraethylammonium aluminate. Amorphous silica-alumina solids may be used as the source of the silica and alumina. The reaction mixture is initially continuously or periodically stirred to insure homogeneity. After this mixing, agitation may be stopped as it is unnecessary to agitate the reaction mass during the formation and crystallization of the zeolite, although mixing during such latter stages has not been found to be detrimental.

In the prior art synthesis of zeolite beta, the composition of the reaction mixture is said to be critical. Specifically, the presence of tetraethylammonium ions in such mixture is described as essential for the production of zeolite beta. In the absence of such ions or in the presence of quaternary ammonium ions other than tetraethyl, no zeolite beta was obtained.

However, TEA hydroxide or other sources of the TEA cation are relatively much more expensive than the other components of the reaction mixture, and the use of large amounts of this material results in zeolite beta being an expensive material to manufacture on a large scale. Moreover, the decomposition of TEA hydroxide or other sources of TEA during the manufacture of zeolite beta generates a high pressure buildup if large amounts of the TEA source have to be used. This imposes more rigid requirements on the equipment in which zeolite beta is manufactured on a large scale and so increasing the price of zeolite beta even more. Since zeolite beta may be useful in catalytic and adsorbent enduse where large charges of the zeolite are required its high cost is a serious disadvantage for using the zeolite in such processes. Moreover, as described hereinbefore the prior art processes typically use a two solution synthesis: a first aqueous solution of the silica source and alumina source being reacted with an aqueous solution of TEA hydroxide. The prior art process gives low yields of zeolite beta and is very expensive because of the large amounts of TEA need.

It has now surprisingly been found that zeolite beta may be prepared by a process enabling significant reductions in the amounts of the TEA cation and water to be made and/or increased yields. The invention further provides a simplified preparation in which a one solution synthesis is employed with benefits in terms of increased yield and/or reduced autoclave size for its preparation.

Accordingly this invention provides a process for the preparation of zeolite beta, in which a reaction mixture comprising sources of sodium, aluminium, tetraethylammonium (TEA), silicon and water, utilising the molar ratio (expressed as oxide) $SiO_2/Al_2O_3$ from 10 to 200 and optionally with a seeding quantity of zeolite beta, is heated at a temperature above 75°C until zeolite beta is formed, characterised in that the reaction mixture comprises the components in the following molar ratios (expressed as oxide):

$Na_2O/TEA_2O$ from 0.3 to 1.0
$TEA_2O/SiO_2$ from 0.01 to 0.1
$H_2O/TEA_2O$ from 25 to 150

and is formed by first mixing powdered sources of sodium oxide, silica and alumina (optionally with zeolite beta seeds), and without the addition of water in such a quantity that the initial mixture becomes a solution or sol, and thereafter combining the mixed powder with an aqueous solution containing TEA cations.

The present invention is particularly suitable for small scale preparations.

The preferred reaction mixture for use in the invention whether using the dry powder mixture or not comprises the components in the following molar ratios:

$SiO_2/Al_2O_3$ = 10-100, more preferably 10-70
$Na_2O/TEA_2O$ = 0.3-1.0, more preferably 0.3-0.8, most preferably 0.4-0.8
$TEA_2O/SiO_2$ = 0.05-0.1, more preferably 0.07-0.1
$H_2O/TEA_2O$ = 40-100, more preferably 45-80

and the preferred amount of optional zeolite beta seeds is from 0.1 to 1.0 wt% of the reaction mixture, more preferably 0.1 to 0.4 wt% of the reaction mixture.

Preferably when using the mixed powder approach, this is prepared in the first step of the process of the invention so that the components are present in the following molar ratios:

$Na_2O/Al_2O_3$ = 1-2
$SiO_2/Al_2O_3$ = 10-100

The aqueous TEA solution added in the second step of such a synthesis preferably comprises the following molar ratio:

$H_2O/TEA_2O$ = 20-100

The source of silica for use in the invention is preferably an amorphous solid silica, dry silicic acid or a silicate. The source of alumina may be alumina itself, or an aluminate such as sodium aluminate, in which latter case the aluminate also acts as a source of some or all of the sodium. Alternatively a silica-alumina solid may be used as the source of both the silica and alumina. Sodium may be added in the form of any sodium compound provided that the anion thus introduced does not interfere with the synthesis. Apart from sodium aluminate, a preferred sodium source is sodium hydroxide. These sources optionally together with preformed zeolite beta seeds are mixed in the first step to form a mixed powder. Any convenient form of solids mixing can be used for this purpose, and if it is necessary to reduce the particle size it would be possible to effect mixing in a mill, such as a ball mill.

According to the invention no substantial amount of water, is introduced at this point. It is not necessary for the powdered sources to be anhydrous and it is not intended to exclude small amounts of water that may be chemically or physically bonded to the powdered materials or which is otherwise entrained or absorbed into those materials. Nor is it intended to exclude small amounts of water that may be desirable for the purpose of handling the powder e.g. in dislodging powder from the mixing vessel. The term "without the addition of any substantial amount of water" excludes the addition of water in such quantities that the initial mixture becomes a solution or sol.

The source of TEA cations for the aqueous solution used in the second stage of the preparation of the reaction may be tetraethylammonium hydroxide or a salt, provided that the anion does not interfere with the zeolite formation.

The crystallization can be carried out at temperatures of at least 75° C and generally in the range of 100° C to 250° C, preferably 125° to 200° C. The crystallization time is dependent of the reaction mixture and the crystallization temperature, and it is within the competence of ones skilled in the art to determine an appropriate time by taking samples at intervals to determine the extent of zeolite beta formation. By way of illustation, the crystallization time may be from a few hours to 50 days or more, but it is generally of the order of 2 to 20 days. The pressure during crystallization may be atmospheric or greater, e.g. varying from 1 to 60 bar, but this is by no means limiting. Crystallization is conveniently carried out under autogeneous conditions. The pressure build-up under such conditions - depending on the amount of TEA present and on the crystallization time - usually varies from 10 to 30 bar at autoclave filling levels of 60% or more.

After formation, zeolite beta may be separated from the mother liquor and washed using normal workup techniques.

Zeolite beta may be characterized by its X-ray powder diffraction pattern (XRD pattern) which defines the unique structure of the zeolite. The characteristic d spacings of the XRD pattern are set out below in Table 1.

Table 1

| Characteristic d spacings (nm) for zeolite beta |
| --- |
| $1.14\pm0.02$ |
| $0.74\pm0.02$ |
| $0.67\pm0.02$ |
| $0.425\pm0.01$ |
| $0.397\pm0.01$ |
| $0.30\pm0.01$ |
| $0.22\pm0.01$ |

Zeolite beta has extremely useful properties as an adsorbent and as a catalyst, as described in more detail in US 3 308 069, US Re 28341, US 3 793 385 and EP 95303. High silica forms of zeolite beta may also be prepared by dealumination as described in EP 95304, and are useful in catalytic applications. Zeolite beta has been prepared having a composition outside the range defined in US Re 28341. Catalytic materials can be prepared by calcining the original sodium form of zeolite beta and/or by replacing the major portion of the sodium in the zeolite with other metallic and/or ammoniacal ions. When calcination is carried out prior to ion exchange, some or all of the resulting hydrogen ions can be replaced by metal ions in the ion exchange process. For certain dehydrogenation and hydrogenation reactions such as hydrocracking, the catalyst will preferably contain a metal of Groups VB, VIB or VIII of the Periodic Table and such metal may either be in the cation of the zeolite or deposited on the surface of the zeolite. Thus, a zeolite beta catalyst containing a metal of Groups IA, IIA, IIIA or one of the transition metals may have deposited thereon a metal of Groups VB, VIB or VIII of the Periodic Table.

Zeolite beta may be used as an adsorbent in any suitable form. For example, a column of powder crystalline material may afford excellent results as may a pelleted form obtained by forming pellets of a mixture of zeolite beta and a suitable binder.

The compositions which may be formed by the invention include not only the sodium form of zeolite beta as synthesized from a system with sodium as the exchangeable cation but also crystalline materials obtained from such a zeolite by partial or complete replacement of the sodium ion with other cations. The sodium cations can be replaced, at least in part, by other ions including but not limited to those of metals below sodium in the electro motive series, calcium, ammonium, hydrogen and mixtures thereof. Particularly preferred for such purpose are the alkaline earth metal ions; transition metal ions such as manganese and nickel; rare earth metal ions and other ions, for example, hydrogen and ammonium which behave in zeolite beta as metals in that they can replace metal ions without causing any appreciable change in the basic structure of the zeolite crystal. The transition metals include scandium, titanium, vanadium, chromium, manganese, iron, cobalt, nickel, yttrium, zirconium, niobium, molyodenum, ruthenium, rhodium, palladium, platinum, hafnium, tantalum, tungsten, rhenium, osmium, iridium, copper, zinc, silver and gold.

Ion exchange of the sodium form of zeolite beta may be accomplished by conventional methods, for example by washing the zeolite with a water solution of a soluble salt of the cation to be introduced into the zeolite. Ion exchange does not substantially change the zeolite structure.

The invention will now be described in more detail, though only by way of illustration, in the following Examples.

Comparative Example 1 - Preparation of zeolite beta.

A first solution was prepared by dissolving 59.13 g of silicic acid (Baker 0254, 89% $SiO_2$) in 202.2 g of 40 wt.% tetraethylammonium hydroxide in water. This was added to a second solution prepared by dissolving 1.48 g of Al-pellets (Baker 1003) and 2.69 g of sodium hydroxide (Baker 0402, 98.9%) in 17.7 g of water. The two solutions were mixed to form a reaction mixture with the composition (expressed in mole ratios of oxides):

1.2 $Na_2O$-10.0$(TEA)_2O$-$Al_2O_3$-32.0 $SiO_2$-306.2 $H_2O$

This reaction mixture was placed in a 0.3 l autoclave and heated to 150° C for 6 days. The product obtained was separated from the mother liquor and washed with distilled water. The product was zeolite beta, as shown by its XRD pattern, and scanning electron micrographs showed the crystallites to be roundish octahedrals (spheroids) in shape with a particle size of 3 micrometers accompanied by finer crystallites of about 1 micrometer.

Example 1 - Preparation of zeolite beta

Silicic acid (Baker 0254, 89% $SiO_2$), sodium aluminate (Guilini, 54% $Al_2O_3$, 40% $Na_2O$ or Dynamit Nobel 53% $Al_2O_3$ 41% $Na_2O$) and 0.2 wt% (of the total zeolite beta gel) of preformed zeolite beta seeds (prepared according to the Comparative Example) were mixed in powder form without the addition of water. The formed composite powder was combined with a 20-40 wt.% aqueous solution of TEA hydroxide to form a reaction mixture. This reaction mixture was then placed in a 0.3 litre autoclave and heated at the temperature and time given below. The product was separated from the mother liquor and washed with distilled water. The reaction mixture composition, crystallization conditions and product characteristics are summarized in Table 2 below.

EP 0 187 522 B2

**TABLE 2**

| Example | Gel composition (mol/mol Al₂O₃) Na₂O | TEA₂O | SiO₂ | H₂O | Crystallization conditions Temp (°C) | Period (days) | Autocl. Vol. (L) | Stirring (rpm) | XRO Crystallinity (%) | Comments | Yield * (wt% SiO₂) | Notes |
|---|---|---|---|---|---|---|---|---|---|---|---|---|
| 1 | 1.2 | 2.8 | 30.7 | 167 | 150 | 6 | 0.3 | - | 80 | pure β | 101 | |
| 2 | 1.2 | 2.8 | 30.7 | 167 | 150 | 10 | 0.3 | - | 87 | pure β | 110 | |
| 3 | 1.2 | 2.8 | 30.7 | 167 | 150 | 6 | 1.0 | 30 | 79 | pure β | 99 | |
| 4 | 1.2 | 1.8 | 20.5 | 112 | 150 | 6 | 0.3 | - | 63 | virtually pure β | 111 | |
| 5 | 1.2 | 1.4 | 15.8 | 84 | 150 | 6 | 0.3 | - | 53 | β + small amount of coexisting phase(s) | 111 | |
| 6 | 1.2 | 2.8 | 30.7 | 167 | 150 | 9 | 1.0 | 30 | 86 | pure β | 86 | |
| 7 | 1.2 | 2.9 | 30.7 | 132 | 150 | 6 | 1.0 | 30 | 83 | pure β | 75 | |
| 8 | 1.2 | 2.8 | 30.7 | 167 | 150 | 6 | 0.3 | - | 75 | pure β | 108 | |
| 9 (Comparative) | 2.5 | 1.5 | 30.6 | 161 | 150 | 7 | 1.0 | 50 | - | unknown crystalline phase(s) | 100 | |
| 10 | 1.3 | 2.8 | 31.3 | 197 | 150 | 6 | 25.0 | 30 | 88 | pure β | 111.5 | 2 |
| 11 | 1.3 | 2.8 | 31.3 | 197 | 148 | 6.5 | 25.0 | 30 | 88 | pure β | 112.0 | 2,3 |
| 12 | 1.3 | 2.8 | 31.2 | 197 | 150 | 7 | 25.0 | 30 | 82 | pure β | 120 | 2,3 |
| 13 | 1.3 | 2.8 | 31.2 | 182 | 170 | 4 | 0.3 | - | 65 | β + small amount of coexisting phase(s) | 114 | |
| 14 | 1.3 | 2.8 | 31.2 | 182 | 170 | 6 | 0.3 | - | 58 | β + amounts of co-existing phase(s) increased compared to Example 13 | 116 | |
| 15 | 1.3 | 2.8 | 31.2 | 197 | 150 | 7 | 25.0 | 30 | 84 | pure β | 118 | |
| 16 | 1.3 | 2.8 | 30.7 | 209 | 150 | 6 | 0.3 | - | 56 | pure β | 116 | 4 |
| 17 | 1.3 | 2.8 | 30.7 | 190 | 150 | 6 | 0.3 | - | 57 | pure β | 115 | 4 |
| 18 | 1.3 | 2.0 | 30.7 | 171 | 150 | 6 | 0.3 | - | 54 | pure β | 113 | 4 |
| 19 | 1.3 | 2.7 | 30.7 | 179 | 150 | 6 | 0.3 | - | 58 | pure β | 115 | 4 |
| 20 | 1.3 | 2.8 | 30.7 | 200 | 150 | 6 | 0.3 | - | 51 | pure β | 110 | 4 |
| 21 | 1.3 | 2.8 | 30.7 | 171 | 150 | 6.5 | 1.0 | 30 | 76 | pure β | 82 | 4 |
| 22 | 1.2 | 2.8 | 30.6 | 167 | 150 | 6 | 0.3 | - | 73 | pure β | 112 | |

TABLE 2 (Continued) (2)

| Example | Gel composition (mol/mol Al$_2$O$_3$) | | | | Crystallization conditions | | | | XRD | | Yield * (wt% SiO$_2$) | Notes |
| | Na$_2$O | TEA$_2$O | SiO$_2$ | H$_2$O | Temp (°C) | Period (days) | Autocl. Vol. (L) | Stirring (rpm) | Crystallinity (%) | Comments | | |
|---|---|---|---|---|---|---|---|---|---|---|---|---|
| 23 | 1.2 | 1.4 | 30.6 | 188 | 150 | 6 | 0.3 | - | 31 | pure β coming up; still largely amorphous | 112 | |
| 24 | 1.2 | 2.6 | 29.9 | 245 | 150 | 6 | 0.3 | - | 47 | pure β & small amount of co-existing phase(s) | 99 | 5 |
| 25 | 1.2 | 2.8 | 31.0 | 167 | 150 | 6 | 0.3 | - | 68 | pure β | 107 | 6 |
| 26 | 2.5 | 5.6 | 62.4 | 340 | 150 | 6 | 0.3 | - | 92 | pure β | 108 | 7 |
| 27 | 1.3 | 5.6 | 62.4 | 339 | 150 | 6 | 0.3 | - | 60 | zeolite β contaminated with ZSM-5 | | 8 |

Footnotes:

* After drying at 100-120°C/overnight

2  Scale-up to 25-l; Baker silicic acid now contained 84% SiO$_2$. Pmax 16.55 bar (240 psi.).

3  Mixing of chemicals was reversed to suppress dust formation during gel preparation and to shorten the addition period; aq. template solution was added to solid mix of Na-aluminate, silicic acids and seeds.

4  AK20 SM-604 silicic acid; stirred, 1 L-scale encountered problems with gel handling (high viscosity) and product recovery (fine product particles).

5  Crossfield silica used (assumed SiO$_2$-content 90%).

6  Grace silica (Type 254, code 60 A, 90-130 um) assumed SiO$_2$-content 90%.

7  Na-aluminate content decreased by factor 2 compared to Example 3; Na-deficiency countered by addition of NaOH.

8  Na-aluminate content decreased by factor 2 compared to Example 3: however now Na-deficiency not replaced.

EP 0 187 522 B2

test: Cyclohexane sorption

This was measured on a typical zeolite beta sample prepared in the foregoing Examples, which had 60% of the cation sites occupied by sodium. A cyclohexane sorption capacity of 17.6% w/w was measured, comparable with the 19.4% w/w reported Re 28341 and clearly distinct from the 1% w/w reported for zeolite Nu-2 in EP-A-0055046.

## Claims

1. A process for the preparation of zeolite beta, in which a reaction mixture comprising sources of sodium, aluminium, tetraethylammonium (TEA), silicon and water, utilising the molar ratio (expressed as oxide) $SiO_2 / Al_2O_3$ from 10 to 200 and optionally with a seeding quantity of zeolite beta, is heated at a temperature above 75°C until zeolite beta is formed:
characterised in that the reaction mixture comprises the components in the following molar ratios( expressed as oxide):

   $Na_2O/TEA_2O$ from 0.3 to 1.0
   $TEA_2O/SiO_2$ from 0.01 to 0.1
   $H_2O/TEA_2O$ from 25 to 150

   and is formed by first mixing powdered sources of sodium oxide, silica and alumina (optionally with zeolite beta seeds), and without the addition of water in such a quantity that the initial mixture becomes a solution or sol, and thereafter combining the mixed powder with an aqueous solution containing TEA cations.

2. A process as claimed in claim 1 in which the reaction mixture comprises the components in the following molar ratios:

   $SiO_2/Al_2O_3$ from 10 to 100
   $Na_2O/TEA_2O$ from 0.3 to 1.0
   $TEA_2O/SiO_2$ from 0.05 to 0.1
   $H_2O/TEA_2O$ from 40 to 100

3. A process as claimed in claim 2 in which the reaction mixture comprises the components in the following molar ratios:

   $SiO_2/Al_2O_3$ from 10 to 70
   $Na_2O/TEA_2O$ from 0.3 to 0.8
   $TEA_2O/SiO_2$ from 0.07 to 0.1
   $H_2O/TEA_2O$ from 45 to 80

4. A process as claimed in claim 3, in which the ratio of $Na_2O/TEA_2O$ = 0.4 to 0.8.

5. A process as claimed in any one of claims 1 to 4, in which the zeolite beta seeds comprise from 0.1 to 1.0 wt% of the reaction mixture.

6. A process as claimed in claim 5, in which the zeolite beta seeds comprise from 0.1 to 0.4 wt% of the reaction mixture.

7. A process as claimed in any of claims 1 to 6, in which the crystallisation is carried out at temperatures in the range of 100°C. to 250°C.

## Patentansprüche

1. Verfahren zur Herstellung von Zeolith β, bei dem eine Reaktionsmischung, die Quellen von Natrium, Aluminium, Tetraethylammonium (TEA), Silicium und Wasser, wobei das Molverhältnis (ausgedrückt als Oxid) $SiO_2/Al_2O_3$ 10 bis 200 beträgt, und gegebenenfalls eine keimbildende Menge Zeolith β umfaßt, auf eine Temperatur oberhalb von 75°C erhitzt wird, bis Zeolith β gebildet wird,
dadurch gekennzeichnet, daß die Reaktionsmischung die Komponenten in den folgenden Molverhältnissen (ausgedruckt als Oxid) umfaßt:

Na$_2$O/TEA$_2$O  0,3 bis 1,0
TEA$_2$O/SiO$_2$  0,01 bis 0,1
H$_2$O/TEA$_2$O   25 bis 150.

und gebildet wird, indem zuerst gepulverte Quellen von Natriumoxid, Siliciumdioxid und Aluminiumoxid (gegebenenfalls mit Zeolith β-Keimen) und ohne Zugabe einer solchen Menge Wasser, daß die Ausgangsmischung eine Lösung oder ein Sol wird, gemischt werden und anschließend das Mischpulver mit einer wäßrigen, TEA-Kationen enthaltenden Lösung kombiniert wird.

2. Verfahren nach Anspruch 1, bei dem die Reaktionsmischung die Komponenten in den folgenden Molverhältnissen umfaßt:

SiO$_2$/Al$_2$O$_3$     10 bis 100
Na$_2$O/TEA$_2$O  0,3 bis 1,0
TEA$_2$O/SiO$_2$    0,05 bis 0,1
H$_2$O/TEA$_2$O     40 bis 100.

3. Verfahren nach Anspruch 2, bei dem die Reaktionsmischung die Komponenten in den folgenden Molverhältnissen umfaßt:

SiO$_2$/Al$_2$O$_3$     10 bis 70
Na$_2$O/TEA$_2$O  0,3 bis 0,8
TEA$_2$O/SiO$_2$   0,07 bis 0,1
H$_2$O/TEA$_2$O    45 bis 80.

4. Verfahren nach Anspruch 3, bei dem das Verhältnis Na$_2$O/TEA$_2$O = 0,4 bis 0,8 ist.

5. Verfahren nach einem der Ansprüche 1 bis 4, bei dem die Zeolith β-Keime 0,1 bis 1,0 Gew.% der Reaktionsmischung ausmachen.

6. Verfahren nach Anspruch 5, bei dem die Zeolith β-Keime 0,1 bis 0,4 Gew.% der Reaktionsmischung ausmachen.

7. Verfahren nach einem der Ansprüche 1 bis 6, bei dem die Kristallisation bei Temperaturen im Bereich von 100°C bis 250°C durchgeführt wird.

## Revendications

1. Procédé de préparation de zéolite bêta, dans lequel un mélange réactionnel comprenant des sources de sodium, d'aluminium, de tétraéthylammonium (TEA), de silicium et d'eau, en un rapport molaire (exprimé sur la base des oxydes) SiO$_2$/Al$_2$O$_3$ de 10 à 200, et facultativement en présence d'une quantité de zéolite bêta destinée à l'ensemencement, est chauffé à une température supérieure à 75°C jusqu'à formation de la zéolite bêta ; caractérisé en ce que le mélange réactionnel comprend les constituants en les rapports molaires suivants (exprimés sur la base des oxydes) :

Na$_2$O/TEA$_2$O de 0,3 à 1,0
TEA$_2$O/SiO$_2$  de 0,01 à 0,1
H$_2$O/TEA$_2$O   de 25 à 150

et est formé par mélange préalable de sources pulvérisées d'oxyde de sodium, de silice et d'alumine (facultativement avec des germes cristallins de zéolite bêta) et sans addition d'eau en une quantité telle que le mélange initial se transforme en une solution ou un sol, puis par mélange de la poudre mixte à une solution aqueuse contenant des cations TEA.

2. Procédé suivant la revendication 1, dans lequel le mélange réactionnel comprend les constituants en les rapports molaires suivants :

SiO$_2$/Al$_2$O$_3$    de 10 à 100.
Na$_2$O/TEA$_2$O de 0,3 à 1,0.

TEA$_2$O/SiO$_2$  de 0,05 à 0,1.
H$_2$O/TEA$_2$O  de 40 à 100.

3. Procédé suivant la revendication 2, dans lequel le mélange réactionnel comprend les constituants en les rapports molaires suivants :

SiO$_2$/Al$_2$O$_3$   de 10 à 70
Na$_2$O/TEA$_2$O de 0,3 à 0,8
TEA$_2$O/SiO$_2$  de 0,07 à 0,1
H$_2$O/TEA$_2$O  de 45 à 80

4. Procédé suivant la revendication 3, dans lequel le rapport Na$_2$O/TEA$_2$O est égal à une valeur de 0,4 à 0,8.

5. Procédé suivant l'une quelconque des revendications 1 à 4, dans lequel les germes cristallins de zéolite bêta représentent 0,1 à 1,0% en poids du mélange réactionnel.

6. Procédé suivant la revendication 5, dans lequel les germes cristallins de zéolite bêta représentent 0,1 à 0,4% en poids du mélange réactionnel.

7. Procédé suivant l'une quelconque des revendications 1 à 6, dans lequel la cristallisation est conduite à des températures comprises dans l'intervalle de 100°C à 250°C.